# EUROPÄISCHE PATENTSCHRIFT

(11) **EP 2 905 669 B1**
(45) Veröffentlichungstag und Bekanntmachung des Hinweises auf die Patenterteilung: **22.03.2017**
(21) Anmeldenummer: 15152793.4
(22) Anmeldetag: 28.01.2015
(51) Int. Cl.: G05D 16/20, F16K 31/02, F16K 31/06, F02M 63/02

(54) **Druckregelventil**
Pressure control valve
Vanne de régulation de pression

(30) Priorität: 11.02.2014 DE 102014101664
(43) Veröffentlichungstag der Anmeldung: 12.08.2015
(73) Patentinhaber: Kendrion (Villingen) GmbH, 78048 Villingen-Schwenningen (DE)
(72) Erfinder: Heingl, Ralf, 78054 Villingen-Schwenningen (DE); Burkart, Harald, 78054 Villingen-Schwenningen (DE); Bergfeld, Björn, 72336 Balingen-Endingen (DE); Lehmann, Volker, 78087 Mönchweiler (DE)
(74) Vertreter: Westphal, Mussgnug & Partner Patentanwälte mbB

(56) Entgegenhaltungen:
- EP-A2- 2 444 652
- WO-A1-02/46622
- DE-A1-102010 049 035
- DE-B3-102007 053 649
- DE-B3-102012 111 106
- US-A- 5 178 359

## Beschreibung

Die Erfindung betrifft ein Druckregelventil gemäß Oberbegriff des Patentanspruchs 1.

Ein solches Druckregelventil für einen Hochdruckspeicher oder eine Hochdruckförderpumpe eines Kraftstoffeinspritzsystems einer Brennkraftmaschine für ein Kraftfahrzeug ist aus der WO 2012/123086 A1 der Anmelderin bekannt.

Bei diesem bekannten Druckregelventil mit einem eine Magnetspule aufnehmenden Ventilkörper, welches einen eine Ventileinrichtung aufweisenden Steuerraum aufweist, wird durch Bestromung der Magnetspule ein Anker in einem Ankerraum in Richtung eines Stirnendes des Ventilkörpers bewegt. Dieser Anker ist mit einem endseitig durch den Ventilkörper geführten und in den Steuerraum ragenden Ankerstößel verbunden. Zur Herstellung eines Druckausgleichs zwischen dem Ankerraum und dem Steuerraum ist zum einen der Anker mit wenigstens einer axialen Druckausgleichsbohrung ausgebildet und zum anderen weisen die beiden Lager des Ankerstößels jeweils wenigstens eine Druckausgleichsnut auf.

Damit ist es möglich, bei diesem bekannten Druckregelventil einen direkten Druckausgleich zwischen dem Ankerraum und dem Steuerraum zu erzielen, so dass das Auftreten von Druckpulsationen in der von dem Ankerstößel betätigten Ventileinrichtung deutlich verringert wird.

Mit einem solchen Druckregelventil kann in einem Diesel Common-Rail-Einspritzsystem der Einspritzdruck sehr präzise geregelt werden und weist eine hohe Stabilität sowohl gegen Hochdruckschwankungen als auch zunehmend gegen erhöhte Drücke auf der Niederdruckseite auf.

Der Erfindung liegt die Aufgabe zugrunde, ein verbessertes Druckregelventil der eingangs genannten Art anzugeben.

Diese Aufgabe wird gelöst durch ein Druckregelventil mit den Merkmalen des Patentanspruchs 1.

Ein solches Druckregelventil, umfassend:
- einen Ventilkörper mit einem eine Ventileinrichtung aufweisenden Steuerraum und einer Magnetspule, wobei radial verlaufende Tankbohrungen in dem Steuerraum enden,
- eine durch Bestromung der Magnetspule in einem Ankerraum verschiebbaren Anker,
- einen durch den Ventilkörper geführten Ankerstößel, welcher an einem Ende mit dem Anker in einer Wirkverbindung steht und am anderen Ende zur Betätigung der Ventileinrichtung in den Steuerraum des Ventilkörpers ragt,
- wobei zur Herstellung eines Druckausgleichs zwischen dem Ankerraum und dem Steuerraum der Anker mit wenigstens einer axialen Druckausgleichsbohrung ausgebildet ist und der Ankerstößel in einem steuerraumseitigen Lager des Ventilkörpers mit wenigstens einer Druckausgleichsnut gelagert ist,
- zeichnet sich erfindungsgemäß dadurch aus, dass die Mündung der wenigstens einen Druckausgleichsnut des steuerraumseitigen Lagers in den Steuerraum mit der Mündung der wenigstens einen Tankbohrung in den Steuerraum fluchtend oder zumindest annähern fluchtend angeordnet ist.

Mit einer solchen radialen oder annähern radialen Ausrichtung der auch als Ölausgleichsnut bezeichneten Druckausgleichsnut des steuerraumseitigen Lagers auf eine radial verlaufende Tankbohrung wird ein stetiger Druckverlauf bei der Regelung der Ventileinrichtung, bspw. des Hochdruckventils des Druckregelventils erreicht. Damit wird ein stetig regelbarer Druck im Druckvolumenstrom der Ventileinrichtung gewährleistet, ohne dass Druckschwingungen entstehen.

Bei einer vorteilhaften Ausgestaltung der Erfindung ist eine einfache konstruktive Realisierung dadurch gegeben, dass die wenigstens eine Druckausgleichsnut bzw. Ölausgleichsnut des steuerraumseitigen Lagers in der Radialebene der wenigstens einen Tankbohrung verläuft.

Besonders vorteilhaft ist es nach einer weiteren Ausgestaltung der Erfindung, wenn das steuerraumseitige Lager zwei diagonal gegenüberliegende Druckausgleichsnuten aufweist, deren Mündungen in den Steuerraum jeweils mit einer Mündung der Tankbohrung in den Steuerraum fluchten.

Ferner ist es vorteilhaft, wenn weiterbildungsgemäß der Ankerstößel in einem weiteren ankerseitigen Lager mit wenigstens einer Druckausgleichsnut gelagert ist. Damit ist eine exakte Führung des Ankerstößels in dem Ventilkörper gewährleistet, wobei aufgrund der Druckausgleichsnuten im Inneren der beiden Lager wegen der geringeren Berührungsflächen auch die Reibung vermindert ist.

Eine besonders vorteilhafte Ausgestaltung der Erfindung ergibt sich mit einer radial zum Umfang des Ankerstößels benachbarten Anordnung der wenigstens einen Druckausgleichsbohrung in dem Anker. Dadurch dass diese Druckausgleichsbohrung direkt benachbart zum Ankerstößel angeordnet ist, ergibt sich ein direkterer Druckausgleich mit dem Steuerraum.

Besonders vorteilhaft ist es gemäß einer Weiterbildung der Erfindung, wenn die wenigstens eine Druckausgleichsbohrung des Ankers mit der Druckausgleichsnut des ankerseitigen und/oder steuerraumseitigen Lagers fluchtet, so dass in fluidtechnischen Anwendungen ein möglichst direkter Fluidaustausch und damit auch ein Druckaustausch ermöglicht wird.

Dabei ist dieses erfindungsgemäße Verfahren besonders effektiv, wenn die Druckausgleichsnuten in den Lagerstellen hinreichend groß ausgeführt werden. Vorzugsweise werden hierzu in dem ankerseitigen Lager vier auf dem inneren Umfang verteilte Druckausgleichsnuten und in dem steuerraumseitigen Lager zwei auf dem inneren Umfang diametral gegenüberliegende Druckausgleichsnuten jeweils mit einem Querschnitt zwischen 0,30 mm² und 0,50 mm² eingebracht. Die beiden Lager können auch jeweils mit nur zwei Druckausgleichsnuten ausgebildet werden, die vorzugsweise jeweils mit einem Querschnitt zwischen 0,50 mm² und 1,50 mm² ausgebildet werden können.

Die Erfindung wird nachfolgend anhand von Ausführungsbeispielen unter Bezugnahme auf die beigefügten Figuren ausführlich beschrieben. Es zeigen:
- Figur 1: eine Schnittdarstellung eines Druckregelventils gemäß der Erfindung,
- Figur 2: eine Draufsicht auf eine ankerseitige Lagerstelle des Druckregelventils nach Figur 1,
- Figur 3: eine Schnittdarstellung gemäß Schnitt A-A eines Steuerraums des Druckregelventils nach Figur 1 mit Sicht auf ein steuerraumseitiges Lager, und
- Figur 4: zwei Zeit-Druck-Diagramme.

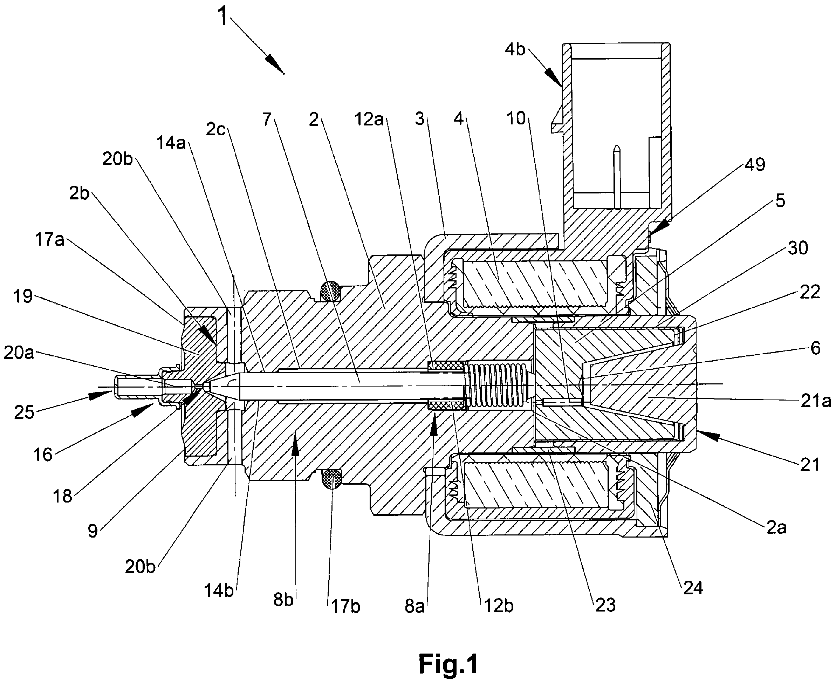

Das in Figur 1 dargestellte Druckregelventil 1 dienst als Hochdruckregelventil für einen Hochdruckspeicher oder eine Hochdruckförderpumpe eines Kraftstoffeinspritzsystems einer Brennkraftmaschine eines Kraftfahrzeugs.

Dieses Druckregelventil 1 gemäß Figur 1 umfasst einen Ventilkörper 2 aus weichmagnetischem Material, an den sich an einer ankerseitigen Stirnseite 2a mittels eines Verbindungsringes 23 hergestellten Verbindung ein topfförmiger Lagendeckel 21 zur Bildung eines Ankerraumes 6 für einen zylinderförmigen Anker 5 anschließt. Der Anker 5 ist dabei in einer Hülse gelagert. Innerhalb dieser Topfform des Lagerdeckels 21 erstreckt sich ausgehend von dessen Bodenteil ein kegelstumpfförmiger Abschnitt 21a in Richtung der Stirnseite 2a des Ventilkörpers 2. Der Anker 5 weist eine an die Kontur dieses kegelstumpfförmigen Abschnittes 21a angepasste Bohrung 5a auf, in die dieser Abschnitt 21a eintauchen kann.

Ein endseitiger Abschnitt des Ventilkörpers 2 und der Bereich des sich anschließenden Lagerdeckels 21 wird von einer in einer Spulenaufnahme 4a angeordneten Magnetspule 4 radial umschlossen, wobei die Magnetspule 4 von einer topfförmigen Spulenaufnahme 3 aufgenommen wird. Die Spulenaufnahme 4a ist zusätzlich mit einem Anschlussstecker 4b ausgestattet. Den Abschluss des Druckregelventils 1 auf der Seite des Lagerdeckels 21 bildet ein Deckelelement 24.

Der Anker 5 wird von einer den kegelstumpfförmigen Abschnitt 21 des Lagerdeckels 21 umschließenden Tellerfeder bzw. Federscheibe als Druckfeder 22 in Richtung der Stirnseite 2a des Ventilkörpers 2 bzw. des Sitzventils 16 beaufschlagt, die sich gegen den Lagerdeckel 21 abstützt. Der Lagerdeckel 21 und die Druckfeder 22 begrenzen den Hub des Ankers 4 in dem Ankerraum 6.

Auf der ankerabgewandten Stirnseite 2b des Ventilkörpers 2 ist eine Ventileinrichtung 16 in Form eines Sitzventils ausbildet. Dieses Druckregelventil 1 wird mit diesem Ventilkörper 2 in einen Hochdruckspeicher (nicht dargestellt) eingeschraubt, wobei über eine Beißkante 17a die Hochdruckseite gegenüber der Niederdruckseite abgedichtet wird, während mittels einer Dichtung 17b eine Abdichtung gegenüber der Umgebung erfolgt.

Bei diesem Druckregelventil 1 wird über die Hochdruckseite ein Fluidstrom mittels der Ventileinrichtung 16 geregelt und über einen Steuerraum 9 als Absteuerraum in radial verlaufende Tankbohrungen 20b als Absteuerbohrungen auf die Niederdruckseite abgeführt. Die Ventileinrichtung 16 wird von einem Ventilstößel 7 betätigt, der axial mittels einer Ventilstößelbohrung 2c durch den Ventilkörper 2 geführt ist und auf der steuerraumabgewandten Stirnseite 2a des Ventilkörpers 2 mit dem Anker 5 in einer Wirkverbindung steht, bzw. mit diesem verbunden ist. Der auf der gleichen Stirnseite 2a des Ventilkörpers 2 ausgebildeter Ankerraum 6 ermöglicht eine Hubbewegung des Ankers 5 zur Betätigung des Dichtelements 18, das vorliegend als Ventilkugel ausgebildet ist.

Der Ventilstößel 7 ist axial beweglich in der axialen Ventilstößelbohrung 2c des Ventilkörpers 2 mittels eines ankerseitigen Lagers 8a und eines steuerraumseitigen Lagers 8b gelagert und ist an seinem sitzventilseitigen Ende konisch ausgebildet, um dort ein kugelförmiges Dichtelement 18 des Sitzventils 16 betätigen zu können. Der Ventilsitz für diese Ventilkugel 18 wird von einem Ventilsitzelement 19 gebildet, das stirnseitig in einer Sacklochbohrung des Ventilkörpers 2 angeordnet ist und einen von der Ventilkugel 18 verschließbaren Kanal 20a zum Common Rail aufweist, der über ein Filterelement 25 eine Verbindung zu dem Hochdruckspeicher herstellt.

Im axialen Bereich der Ventileinrichtung 16 weist der Ventilkörper 2 den Steuerraum 9 auf, der über die radial verlaufenden Tankbohrungen 20b in dem Ventilkörper 2 mit einem Tanksystem (nicht dargestellt) verbunden wird.

Ist dieses Druckregelventil 1 bspw. an einen Hochdruckspeicher angeschlossen, bewirkt dessen Hochdruck im nichtbestromten Zustand der Magnetspule 4 ein Abheben der Ventilkugel 18 von dessen Ventilsitz, wodurch Medium aus dem Hochdruckspeicher über die Tankbohrungen 20b abfließen kann. Durch eine Bestromung der Magnetspule 4 wird der Anker 5 gegen die Stirnseite 2a des Ventilkörpers 2 gezogen, so dass dadurch über den Ventilstößel 7 die Ventilkugel 18 in den Ventilsitz des Sitzventils 16 gedrückt wird, wodurch eine Regelung des Durchflusses in Abhängigkeit des Spulenstromes und damit auch eine Regelung des Hochdruckes durchgeführt werden kann.

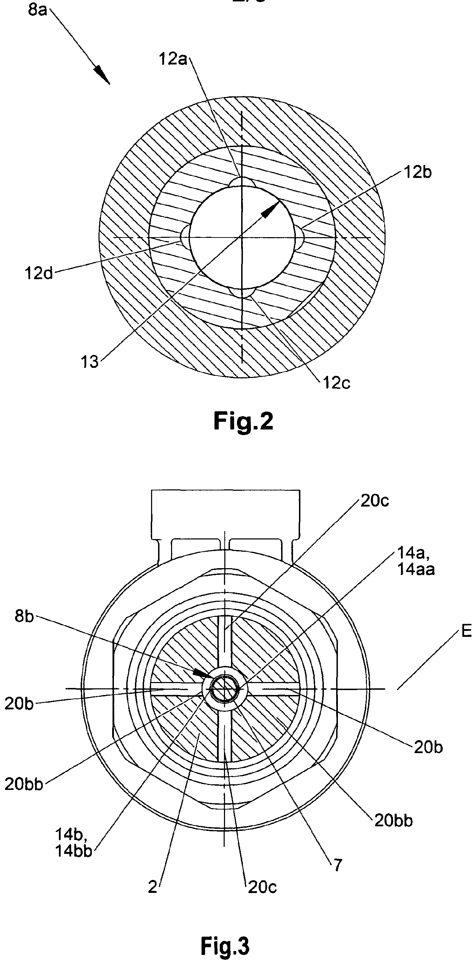

Zur Realisierung eines Druckausgleichs zwischen dem Steuerraum 9 und dem Ankerraum 6 ist zum einen in dem Anker 5 eine Druckausgleichsbohrung 10 (vgl. Figur 1) und zum anderen sind in dem in der Ventilstößelbohrung 2c angeordneten ankerseitigen Lager 8a und in dem steuerraumseitigen Lager 8b axiale Druckausgleichsnuten 12a bis 12c bzw. 14a und 14b vorgesehen, wie nachfolgend anhand der Figuren 2 und 3 erläutert werden soll.

Das ankerseitige Lager 7a stellt eine Lagerbuchse aus Kunststoff, bspw. aus Torlon® dar, die in die Ventilstößelbohrung 2c eingepresst ist und deren Draufsicht die Figur 2 zeigt. Auf der Innenfläche 13 dieses als Lagerhülse ausgebildeten Lagers 8a sind gleichmäßig auf dem Umfang verteilte Druckausgleichsnuten 12a, 12b, 12c und 12d angeordnet. Die Druckausgleichsbohrung 10 auf eine der vier Druckausgleichsnuten 12a bis 12d fluchten, um damit einen direkten Fluidausgleich zu erzielen.

Die Figur 3 zeigt in dem durch den Steuerraum 9 im Bereich der Tankbohrungen 20b geführten Schnitt A-A eine Draufsicht auf das steuerraumseitige Lager 8b, welches gemäß Figur 1 an der ankerabgewandten Stirnseite des Ventilkörpers 2 in der Ventilstößelbohrung 2c angeordnet ist. Auf der Innenfläche dieses steuerraumseitigen Lagers 8b sind zwei diametral gegenüberliegende axiale Druckausgleichsnuten 14a und 14b angeordnet. Diese Druckausgleichsnuten 14a und 14b können fluchtend mit den Druckausgleichsnuten der ankerseitigen Lagerbuchse 8a ausgerichtet sein.

Des Weiteren sind die beiden Druckausgleichsnuten 14a und 14b in dem steuerraumseitigen Lager 8b derart ausgerichtet, dass sie jeweils mit einer Tankbohrung 20b fluchten. Das bedeutet, dass zumindest die Mündung 14aa der Druckausgleichsnut 14a in den Steuerraum 9 mit der Mündung 20bb einer Tankbohrung 20b in den Steuerraum 9 fluchtet und in gleicher Weise die Mündung 14bb der Druckausgleichsnut 14b in den Steuerraum 9 mit der Mündung 20bb der diametral gegenüberliegenden Tankbohrung 20b in den Steuerraum 9 fluchtet. Schließlich ist es aus den Figuren 1 und 3 ersichtlich, dass die beiden Druckausgleichsnuten 14a und 14b in einer die Symmetrieebene der Tankbohrungen 20b bildende Radialebene E verlaufen.

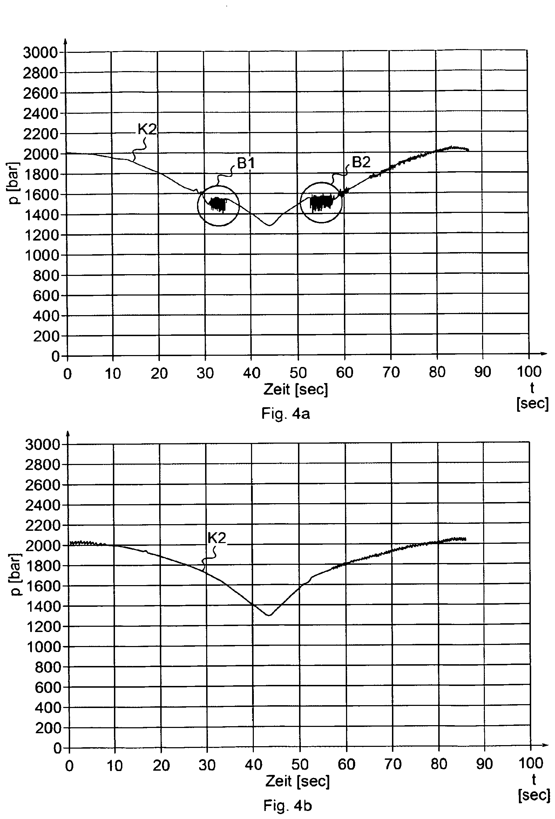

Durch die Druckausgleichsbohrung 10 in dem Anker 5 und den Druckausgleichsnuten 12a bis 12d bzw. 14a und 14b in den beiden Lagern 8a und 8b wird ein Druckausgleich zwischen dem Ankerraum 6 und dem Steuerraum 9 bewirkt, so dass Druckpulsationen in dem angeschlossenen Druckspeicher (Common Rail) nicht gegen Ventilelemente wirken, sondern alle Ventilelemente umströmen.
Des Weiteren wird durch die radiale Ausrichtung der beiden Druckausgleichsnuten 14a und 14b in dem steuerraumseitigen Lager 8b auf die beiden Tankbohrungen 20b ein stetiger Druckverlauf bei der Regelung des Sitzventils 16 erreicht, wie dies aus den Druck-Zeit-Diagrammen gemäß den Figuren 4 ersichtlich ist. Hiernach zeigt Figur 4a den zeitabhängigen Druckverlauf p über die Dauer eines Regelvorganges bei einem Druckregelventil 1 gemäß des Standes der Technik, bei dem also die Druckausgleichsnuten 14a und 14b eines steuerraumseitigen Lagers 8b nicht mit den Tankbohrungen 20b fluchten. Die Kurve K1 in diesem Diagramm gemäß Figur 4a zeigt in zwei Bereichen B1 und B2 heftige Druckschwankungen. Im Vergleich hierzu zeigt die Kurve K2 in dem Diagramm gemäß Figur 4b einen stetigen Druckverlauf ohne solche Ausschläge. Diese Kurve K2 gemäß Figur 4b wurde mittels eines Druckregelventils 1 gemäß den Figuren 1 bis 3 erzeugt, bei dem die Druckausgleichsnuten 14a und 14b des steuerraumseitigen Lagers 8b mit den Tankbohrungen 20b fluchten.

Diese fluchtende Ausrichtung der Druckausgleichsnuten 14a und 14b auf diese Tankbohrungen 20b sichert damit einen stetigen Druckverlauf bei einer Reduzierung des Volumenstromes am Sitzventil 16, ohne dass Druckschwingungen in einem angeschlossenen Einspritzsystem einer Brennkraftmaschine entstehen.

Das ankerseitige Lager 8a kann anstatt mit vier Druckausgleichsnuten auch nur mit zwei Druckausgleichsnuten 12a und 12c ausgebildet werden. Entsprechend ist es auch möglich, dass das steuerraumseitige Lager 8b anstatt mit zwei Druckausgleichsnuten 14a und 14b mit vier Druckausgleichsnuten ausgestattet wird.

Das Maß des Druckausgleichs zwischen dem Ankerraum 6 und dem Steuerraum 9 lässt sich durch eine Dimensionierung der Druckausgleichsbohrungen und/oder durch deren Anzahl einstellen, wenn die Summe der Querschnitte der Druckausgleichsnuten jeweils in den beiden Lagern 8a und 8b hinreichend groß sind. Die letztgenannte Bedingung kann erreicht werden entweder durch eine Vergrößerung des Querschnitts und/oder Vergrößerung der Anzahl der Druckausgleichsnuten in den Lagern 8a und 8b.

Hinsichtlich des steuerraumseitigen Lagers 8b bedeutet dies, dass mit zwei Druckausgleichsnuten 14a und 14b für eine Druckausgleichsnut ein Querschnitt zwischen 0,50 mm² und 1,50 mm² und ein Querschnitt zwischen 0,30 mm² und 0,50 mm² bei vier Druckausgleichsnuten ausreichend ist. Natürlich können hierfür auch mehr als vier Druckausgleichsnuten vorgesehen werden.

Die Druckausgleichsnuten 12a bis 12d des ankerseitigen Lagers 8a weisen jeweils einen Querschnitt zwischen 0,30 mm² und 0,50 mm² auf. Werden nur zwei Druckausgleichsnuten bei diesem Lager 8a vorgesehen, ist ein Querschnitt zwischen 0,50 mm² und 1,50 mm² ausreichend. Auch dieses Lager 8a kann mit mehr als vier Druckausgleichsnuten ausgebildet werden.

Zur Einstellung des Druckausgleichs kann der Querschnitt der Druckausgleichsbohrung 10 des Ankers 5 zwischen 2,50 mm² und 4,50 mm² liegen. Es ist auch möglich mehrere Druckausgleichsbohrungen in dem Anker 5 vorzusehen. In diesem Fall können deren Querschnitte entsprechend verkleinert werden. Die Bohrungen 10 können z.B. einen Durchmesser von 0,5 mm haben.

### Bezugszeichenliste

- 1: Druckregelventil
- 2: Ventilkörper
- 2a: ankerseitige Stirnseite des Ventilkörpers 2
- 2b: ankerabgewandte Stirnseite des Ventilkörpers 2
- 2c: Ventilstößelbohrung
- 3: Spulenaufnahme
- 4: Magnetspule
- 4a: Spulenaufnahme der Magnetspule
- 4b: Anschlussstecker der Spulenaufnahme 4a
- 5: Anker
- 5a: Sacklochbohrung des Ankers 5
- 6: Ankerraum
- 7: Ankerstößel, Ventilstößel
- 8a: Lager, Lagerhülse
- 8b: Lager
- 9: Steuerraum, Absteuerraum

- 10: Druckausgleichsbohrung des Ankers
- 12a - 12d: Druckausgleichsnuten im Lager 8a
- 13: Innenfläche des Lagers 8a
- 14a: Druckausgleichsnut des Lagers 8b
- 14aa: Mündung der Druckausgleichsnut 14a
- 14b: Druckausgleichsnut des Lagers 8b
- 14bb: Mündung der Druckausgleichsnut 14b
- 16: Ventileinrichtung, Sitzventil
- 17a: Beißkante
- 17b: Dichtung
- 18: Dichtelement, Ventilkugel
- 19: Ventilsitzelement
- 20a: Kanal
- 20b: Tankbohrung, Absteuerbohrung
- 20bb: Mündung der Tankbohrung 20b
- 21: Lagerdeckel
- 21a: kegelstumpfförmiger Abschnitt des Lagerdeckels 21
- 22: Druckfeder
- 23: Verbindungsring
- 24: Deckelelement
- 25: Filterelement

- E: Radialebene der Tankbohrungen 20b

- B1: Bereich der Kurve K2
- B2: Bereich der Kurve K2

- K1: Kurve des p-t-Diagramms nach Fig. 5a
- K2: Kurve des p-t-Diagramms nach Fig. 5b

## Patentansprüche

1. Druckregelventil (1), umfassend:
- einen Ventilkörper (2) mit einem eine Ventileinrichtung (16) aufweisenden Steuerraum (9) und einer Magnetspule (4), wobei radial verlaufende Tankbohrungen (20b) in dem Steuerraum (9) enden,
- einen durch Bestromung der Magnetspule (4) in einem Ankerraum (6) verschiebbaren Anker (5),
- einen durch den Ventilkörper (2) geführten Ankerstößel (7), welcher an einem Ende mit dem Anker (5) in einer WirkVerbindung steht und am anderen Ende zur Betätigung der Ventileinrichtung (16) in den Steuerraum (9) des Ventilkörpers (2) ragt,
- wobei zur Herstellung eines Druckausgleichs zwischen dem Ankerraum (6) und dem Steuerraum (9) der Anker (5) mit wenigstens einer axialen Druckausgleichsbohrung (10) ausgebildet ist und der Ankerstößel (7) in einem steuerraumseitigen Lager (8b) des Ventilkörpers (2) mit wenigstens einer Druckausgleichsnut (14a, 14b) gelagert ist,
**dadurch gekennzeichnet, dass**
- die Mündung (14aa, 14bb) der wenigstens einen Druckausgleichsnut (14a, 14b) des steuerraumseitigen Lagers (8b) in den Steuerraum (9) mit der Mündung (20bb) der wenigstens einen Tankbohrung (20b) in den Steuerraum (9) fluchtend oder zumindest annähern fluchtend angeordnet ist.

2. Druckregelventil (1) nach Anspruch 1,
**dadurch gekennzeichnet, dass**
die wenigstens eine Druckausgleichsnut (14a, 14b) des steuerraumseitigen Lagers (8b) in der Radialebene (E) der wenigstens einen Tankbohrung (20b) verläuft.

3. Druckregelventil (1) nach Anspruch 1 oder 2,
**dadurch gekennzeichnet, dass**
das steuerraumseitige Lager (8b) zwei diagonal gegenüberliegende Druckausgleichsnuten (14a, 14b) aufweist, deren Mündungen (14aa, 14bb) in den Steuerraum (9) jeweils mit einer Mündung (20bb) der Tankbohrung (20b) in den Steuerraum (9) fluchten.

4. Druckregelventil (1) nach einem der vorhergehenden Ansprüche,
**dadurch gekennzeichnet, dass**
der Ankerstößel (7) in einem weiteren ankerseitigen Lager (8a) mit wenigstens einer Druckausgleichsnut (12a - 12d) gelagert ist.

5. Druckregelventil (1) nach einem der vorhergehenden Ansprüche,
**dadurch gekennzeichnet, dass**
die wenigstens eine Druckausgleichsbohrung (10) in dem Anker (5) radial benachbart zum Umfang des Ankerstößels (7) angeordnet ist.

6. Druckregelventil (1) nach einem der vorhergehenden Ansprüche,
**dadurch gekennzeichnet, dass**
die wenigstens eine Druckausgleichsbohrung (10) des Ankers (5) mit der wenigstens einen Druckausgleichsnut (12a - 12d, 14a, 14b) des steuerraumseitigen und/oder ankerseitigen Lagers (8a, 8b) fluchtet.

7. Druckregelventil (1) nach Ansprüche 4 bis 6,
**dadurch gekennzeichnet, dass**
das ankerseitige Lager (8a) mit vier gleichmäßig auf dem inneren Umfang (13) verteilte axiale Druckausgleichsnuten (12a - 12d) mit jeweils einem Querschnitt zwischen 0,30mm² und 0,50mm² oder mit zwei diametral auf dem inneren Umfang gegenüberliegenden axialen Druckausgleichsnuten (12a, 12b) mit jeweils einem Querschnitt zwischen 0,50 mm² und 1,50 mm² ausgebildet ist.

## Claims

1. Pressure control valve (1), comprising:
- a valve body (2) having a control chamber (9) that has a valve device (16) and a magnetic coil (4), wherein radially running tank holes (20b) end in the control chamber (9),
- an armature (5) that is able to be shifted into an armature chamber (6) by energising the magnetic coil (4),
- an armature tappet (7) guided through the valve body (2), said armature tappet being operatively connected at one end to the armature (5) and protruding into the control chamber (9) of the valve body (2) at the other end to activate the valve device (16),
- wherein the armature (5) is formed having at least one axial pressure compensation hole (10) for producing a pressure compensation between the armature chamber (6) and the control chamber (9) and the armature tappet (7) is mounted in a bearing (8b) of the valve body (2) on the control chamber side having at least one pressure compensation groove (14a, 14b),
**characterised in that**
- the opening (14aha, 14bb) of the at least one pressure compensation groove (14a, 14b) of the bearing (8b) on the control chamber side is arranged in the control chamber (9) to align or at least roughly align with the opening (20bb) of the at least one tank hole (20b) in the control chamber (9).

2. Pressure control valve (1) according to claim 1,
**characterised in that**
the at least one pressure compensation groove (14a, 14b) of the bearing (8b) on the control chamber side runs in the radial plane (E) of the at least one tank hole (20b).

3. Pressure control valve (1) according to claim 1 or 2,
**characterised in that**
the bearing (8b) on the control chamber side has two diagonally opposing pressure compensation grooves (14a, 14b), the openings (14aa, 14bb) thereof aligning in each case with an opening (20bb) of the tank hole (20b) in the control chamber (9).

4. Pressure control valve (1) according to one of the preceding claims,
**characterised in that**
the armature tappet (7) is mounted in a further bearing (8a) on the armature side having at least one pressure compensation groove (12a - 12d).

5. Pressure control valve (1) according to one of the preceding claims,
**characterised in that**
the at least one pressure compensation hole (10) is arranged in the armature (5) to be radially adjacent to the periphery of the armature tappet (7).

6. Pressure control valve (1) according to one of the preceding claims,
**characterised in that**
the at least one pressure compensation hole (10) of the armature (5) aligns with the at least one pressure compensation groove (12a - 12d, 14a, 14b) of the bearing (8a, 8b) on the control chamber side and/or on the armature side.

7. Pressure control valve (1) according to claims 4 to 6,
**characterised in that**
the bearing (8a) on the armature side is formed to have four axial pressure compensation grooves (12a - 12d) evenly distributed on the inner periphery (13), each having a cross section of between 0.30mm² and 0.50mm² or having two axial pressure compensation grooves (12a, 12b) diametrically opposing each other on the inner periphery, each having a cross section of between 0.50mm² and 1.50mm².

## Revendications

1. Soupape de régulation de pression (1) comprenant :
- un corps de soupape (2) équipé d'une chambre de commande (9) comprenant un dispositif de soupape (16) et d'une bobine magnétique (4) des perçages de réservoir (20b) s'étendant radialement se terminant dans la chambre de commande (9),
- un induit (5) susceptible de coulisser dans une chambre d'induit (6) suite à l'alimentation en courant de la bobine magnétique (4),
- une tige poussoir d'induit (7) passant au travers du corps de soupape (2) qui est en liaison fonctionnelle avec l'induit (5) à l'une de ses extrémités et pénètre par son autre extrémité dans la chambre de commande (9) du corps de soupape (2) pour permettre d'actionner le dispositif de soupape (16),
pour permettre d'obtenir un équilibrage de pression entre la chambre d'induit (6) et la chambre de commande (9), l'induit (5) étant réalisé avec au moins un perçage d'équilibrage de pression axial (10) et la tige poussoir d'induit (7) étant montée dans un palier (8b) situé côté chambre de commande du corps de soupape (2) avec au moins une rainure d'équilibrage de pression (14a, 14b),
**caractérisée en ce que**
l'embouchure (14aa, 14bb) de la rainure d'équilibrage de pression (14a, 14b) du palier (8b) situé côté chambre de commande dans la chambre de commande (9) est alignée avec l'embouchure (20bb) du perçage de réservoir (20b) dans la chambre de commande (9) ou au moins essentiellement alignée avec celle-ci.

2. Soupape de régulation de pression (1) conforme à la revendication 1,
**caractérisée en ce que**
la rainure d'équilibrage de pression (14a, 14b) du palier (8b) situé côté chambre de commande s'étend dans le plan radial (E) du perçage de réservoir (20b).

3. Soupape de régulation de pression (1) conforme à la revendication 1 ou 2,
**caractérisée en ce que**
le palier (8b) situé côté chambre de commande comprend deux rainures d'équilibrage de pression (14a, 14b) transversalement opposées dont les embouchures (14ana, 14bb) dans la chambre de commande (9) sont respectivement alignées avec l'embouchure (20bb) du perçage de réservoir (20b) dans la chambre de commande (9).

4. Soupape de régulation de pression (1) conforme à l'une des revendications précédentes,
**caractérisée en ce que**
la tige poussoir d'induit (7) est montée dans un autre palier (8a) situé côté induit ayant au moins une rainure d'équilibrage de pression (12a - 12d).

5. Soupape de régulation de pression (1) conforme à l'une des revendications précédentes,
**caractérisée en ce que**
le perçage d'équilibrage de pression (10) est installé dans l'induit (5) radialement au voisinage de la périphérie de la tige poussoir d'induit (7).

6. Soupape de régulation de pression (1) conforme à l'une des revendications précédentes,
**caractérisée en ce que**
le perçage d'équilibrage de pression (10) de l'induit (5) est aligné avec la rainure d'équilibrage de pression (12a - 12d, 14a, 14b) du palier (8a, 8b) situé côté chambre de commande et/ou situé côté induit.

7. Soupape de régulation de pression (1) selon les revendications 4 à 6,
**caractérisée en ce que**
le palier (8a) situé côté induit comporte quatre rainures d'équilibrage de pression axiales ( 12a - 12d) uniformément réparties sur sa périphérie interne (13), ayant chacune une surface comprise entre 0,30 mm² et 0,50 mm² ou deux rainures d'équilibrage de pression axiales (12a, 12b) diamétralement opposée sur sa périphérie interne et ayant chacune une section comprise entre 0,50 mm² et 1,50 mm².
